(19) Europäisches Patentamt
European Patent Office
Office européen des brevets

(11) **EP 4 035 774 A1**

(12) **EUROPEAN PATENT APPLICATION**
published in accordance with Art. 153(4) EPC

(43) Date of publication:
**03.08.2022 Bulletin 2022/31**

(21) Application number: **20868793.9**

(22) Date of filing: **01.09.2020**

(51) International Patent Classification (IPC):
**B01J 35/04** (2006.01)    **B01D 53/94** (2006.01)
**B01J 23/63** (2006.01)    **B01J 37/02** (2006.01)
**F01N 3/022** (2006.01)    **F01N 3/035** (2006.01)

(52) Cooperative Patent Classification (CPC):
**B01D 53/94; B01J 23/63; B01J 35/04; B01J 37/02;
F01N 3/022; F01N 3/035**

(86) International application number:
**PCT/JP2020/032989**

(87) International publication number:
**WO 2021/059883 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.09.2019 JP 2019174928**

(71) Applicant: **N.E. Chemcat Corporation
Tokyo 105-6124 (JP)**

(72) Inventors:
• **MOCHIZUKI, Hiroshi**
**Tokyo 105-6124 (JP)**
• **HARA, Hiroyuki**
**Tokyo 105-6124 (JP)**
• **TAKAYAMA, Akito**
**Tokyo 105-6124 (JP)**
• **TAKAHASHI, Yoshinori**
**Tokyo 105-6124 (JP)**

(74) Representative: **TBK
Bavariaring 4-6
80336 München (DE)**

(54) **EXHAUST-GAS-PURIFYING CATALYST PRODUCTION METHOD**

(57)    A method for producing an exhaust gas purification catalyst that purifies exhaust gas emitted from an internal combustion engine, the method including a substrate providing step of providing a treated wall-flow substrate 100 having a partition to which a solid resin 21 is adhered, and a catalyst applying step of applying a catalyst slurry 31a to the partition, wherein the amount of the adhered solid resin 21 is 1.50 to 9.41 g/L.

Fig.1

EP 4 035 774 A1

**Description**

Technical Field

The present invention relates to a method for producing an exhaust gas purification catalyst, and the like.

Background Art

Exhaust gas emitted from internal combustion engines contains particulate matter (PM) including mainly carbon, ash of noncombustible components, and the like, and is known to cause air pollution. To date, diesel engines, which are relatively more likely to emit particulate matter than gasoline engines, have been strictly regulated in terms of particulate matter emissions and,

in recent years, strict regulations are also being imposed on gasoline engines in terms of particulate matter emissions.

A known means to reduce particulate matter emissions is a method involving providing a particulate filter intended to deposit and collect particulate matter in the exhaust gas passage of an internal combustion engine. In particular, in recent years, in view of efficient use of installation space and the like, research has been conducted on providing a catalyst layer by applying a catalyst slurry to a particulate filter and firing it to simultaneously suppress emission of particulate matter and remove harmful substances such as carbon monoxide (CO), hydrocarbon (HC), and nitrogen oxide (NOx).

A particulate filter has a wall-flow substrate in which an introduction-side cell having an open end on the exhaust gas introduction side and a discharge-side cell adjacent to the introduction-side cell and having an open end on the exhaust gas discharge side are defined by a porous partition. A known method for forming the above-described catalyst layer on such a particulate filter involves regulating penetration of a catalyst slurry into the partition by regulating the properties such as viscosity and solid content of the slurry and pressurizing either the introduction-side cell or the discharge-side cell to create a pressure difference between the introduction-side cell and the discharge-side cell (see, for example, Patent Literature 1).

Citation List

Patent Literature

International Publication No. WO 2016/060048

Summary of Invention

Technical Problem

A particulate filter as described in Patent Literature 1 has a wall-flow structure and is configured such that exhaust gas passes through the pores of the partition, in view of removing particulate matter. However, there is still room for improvement in soot collecting performance.

Conventionally, particulate matter emitted from automobile diesel engines has been regulated in terms of the mass of emitted particulate matter. However, the mass of emitted particulate matter is unlikely to numerically reflect ultrafine particles, which easily enter a human body and raise health concerns. Accordingly, the particulate number (PN) regulation has been introduced in recent years to regulate particles in terms of the number of emitted particles.

To date, the mass of particulate matter emitted from gasoline engines has been extremely smaller than that of diesel engines. Accordingly, the regulation concerning the mass of emitted particulate matter has not been actively imposed on gasoline engines compared with diesel engines. However, in recent years, the PN regulation is being introduced to gasoline engines.

The amount of particulate matter emitted by a gasoline engine is different from the amount of particulate matter emitted by a diesel engine. For example, the PM particulate number regulation on gasoline engines ($6 \times 10^{11}$/km) is said to correspond to 0.4 to 0.5 mg/km in terms of the mass of PM. In contrast, the regulatory value for particulate matter on diesel engines is 5 mg/km (0.005 g/km). Thus, albeit a regulation concerning particulate matter, required collecting performance is different between gasoline engines and diesel engines.

In general, a filter having a fine mesh is used to increase collecting performance, resulting in an increased pressure loss. Accordingly, desired is a technique capable of reducing the number of soot particles emitted from gasoline engines without increasing the pressure loss while meeting the PN regulation on gasoline engines, which have a completely different combustion system and exhaust temperature from diesel engines.

The present invention has been made in view of the above problem, and an object thereof is to provide a method for producing an exhaust gas purification catalyst, the method being capable of reproducibly and conveniently producing a high-performance exhaust gas purification catalyst delivering excellent soot collecting performance to meet with the PN regulation. Another object of the present invention is to provide a novel treated wall-flow substrate suitable for use in the method for producing an exhaust gas purification catalyst. In addition to the objects described here, providing effects that result from the configurations set forth in the description of embodiments below and that cannot be obtained from conventional art can also be regarded as another object of the present invention.

Solution to Problem

As a result of diligent research to solve the above problem, the present inventors have found that the problem can be solved by adhering a certain amount or more of a solid resin to a partition and then applying a catalyst slurry, and thus have accomplished the present invention. Specifically, the present invention provides a variety of specific embodiments set forth below.

[1] A method for producing an exhaust gas purification catalyst that purifies exhaust gas emitted from an internal combustion engine, the method comprising:

> a substrate providing step of providing a treated wall-flow substrate having a partition to which a solid resin is adhered, and
> a catalyst applying step of applying a catalyst slurry to the partition, wherein
> an amount of the adhered solid resin is 1.50 to 9.41 g/L.

[2] The method for producing an exhaust gas purification catalyst according to [1], wherein the substrate providing step comprises:

> a sub-step of impregnating an end part on an exhaust gas introduction side or an exhaust gas discharge side of the wall-flow substrate with a resin solution,
> a sub-step of introducing gas into the wall-flow substrate from the end part side to apply the resin solution that impregnates the wall-flow substrate to the porous partition, and
> a sub-step of drying the applied resin solution to cause the solid resin to adhere to at least a part of the partition.

[3] The method for producing an exhaust gas purification catalyst according to [2], wherein

> the resin solution comprises polyvinyl alcohol, and
> a concentration of the polyvinyl alcohol is 0.80 to 5.00% by mass based on the total amount of the resin solution.

[4] The method for producing an exhaust gas purification catalyst according to any one of [1] to [3], wherein the catalyst applying step comprises:

> a sub-step of impregnating an end part on an exhaust gas introduction side or an exhaust gas discharge side of the wall-flow substrate with the catalyst slurry, and
> a sub-step of introducing gas into the wall-flow substrate from the end part side to apply the catalyst slurry that impregnates the wall-flow substrate to the porous partition.

[5] The method for producing an exhaust gas purification catalyst according to any one of [1] to [4], further comprising a heat treatment step of thermally decomposing the resin after the catalyst applying step.
[6] An exhaust gas purification catalyst obtained by the method for producing an exhaust gas purification catalyst according to any one of [1] to [5].
[7] A treated wall-flow substrate comprising:

> a wall-flow substrate having a plurality of passages defined by a porous partition, and
> a solid resin adhered to the partition,

> wherein
> an amount of the adhered solid resin is 1.50 to 9.41 g/L.
[8] The treated wall-flow substrate according to [7], wherein the solid resin comprises polyvinyl alcohol.

Advantageous Effects of Invention

The present invention can provide a method for producing an exhaust gas purification catalyst, the method being capable of reproducibly and conveniently producing a high-performance exhaust gas purification catalyst delivering excellent soot collecting performance, and also can provide a high-performance exhaust gas purification catalyst produced by the production method and delivering excellent soot collecting performance. Moreover, the present invention can provide a novel treated wall-flow substrate suitable for use in the method for producing an exhaust gas purification catalyst. This method for producing an exhaust gas purification catalyst can be used for not only gasoline particulate filters (GPFs) but also other particulate filters such as diesel particulate filters (DPFs) as a means to increase soot collecting performance of catalyst-supported particulate filters, and an exhaust gas treatment system equipped with such a particulate filter delivers better performance.

Brief Description of Drawings

[Figure 1] Figure 1 is a process diagram schematically showing the method for producing an exhaust gas purification catalyst of an embodiment.
[Figure 2] Figure 2 is a schematic diagram showing the state of substrate pores in the steps of the method for producing an exhaust gas purification catalyst of an embodiment.

Description of Embodiments

Embodiments of the present invention will now be described in detail. The following embodiments are examples (representative examples) of aspects of the present invention, and the present invention is not limited thereto. Also, the present invention can be carried out after making suitable modifications without departing from the scope of the invention. Herein, the positional relationship such as top, bottom, right, and left is based on the positional relationship shown in the drawings unless specified otherwise. The dimensional ratios in the drawings are not limited to the illustrated ratios. Herein, the "D50 particle size" refers to the particle size when the integrated value from a small particle size reaches 50% of the whole in the volume-weighted cumulative particle size distribution. The "D90 particle size" refers to the particle size when the integrated value from a small particle size reaches 90% of the whole in the volume-weighted cumulative particle size distribution. Herein, the term "to" between numerical values or physical property values is used to include the values preceding and following the term. For example, the expression of a numerical range "1 to 100" encompasses both its upper limit "100" and lower limit "1". The same also applied to other numerical ranges mutatis mutandis.

[Method for producing exhaust gas purification catalyst]

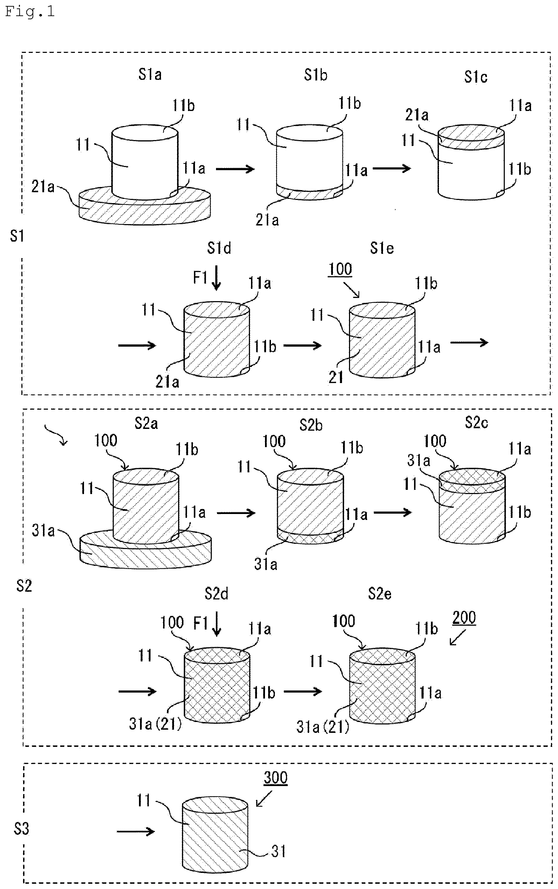

The method for producing an exhaust gas purification catalyst of the present embodiment is a method for producing an exhaust gas purification catalyst 300 that purifies exhaust gas emitted from an internal combustion engine, and comprises a substrate providing step (S1) of providing a treated wall-flow substrate 100 in which a solid resin 21 is adhered to a partition of a wall-flow substrate 11, and a catalyst applying step (S2) of applying a catalyst slurry 31a to the partition, wherein the amount of the adhered solid resin 21 is 1.50 to 9.41 g/L. The method for producing the exhaust gas purification catalyst 300 of the present embodiment may comprise, after the catalyst applying step (S2), a heat treatment step of thermally decomposing the adhered solid resin 21 and a firing step of thermally treating the applied catalyst slurry 31a to form a catalyst layer 31. The heat treatment step and the firing step may be simultaneously carried out by the same heating. Each step will now be described with reference to the process diagram shown in Figure 1, which schematically shows the method for producing the exhaust gas purification catalyst 300 of the present embodiment.

<Substrate providing step>

In this substrate providing step S1, the treated wall-flow substrate 100 (hereinafter also simply referred to as the "substrate 100") having the wall-flow substrate 11 provided with a plurality of passages defined by a porous partition and the solid resin 21 adhered to the partition is provided (Figure 1). Herein, an untreated wall-flow substrate in which the solid resin 21 is not adhered to the partition is referred to as an untreated wall-flow substrate 11 (hereinafter, also simply referred to as the "substrate 11"), and the treated wall-flow substrate in which the solid resin 21 is adhered to the partition is referred to as the treated wall-flow substrate 100 (hereinafter, also simply referred to as the "substrate 100"). The substrate 11 having a wall-flow structure (the untreated wall-flow substrate 11), which constitutes the skeleton of the exhaust gas purification catalyst, will now be described.

(Substrate)

The wall-flow substrate 11 has a wall-flow structure in which an introduction-side cell having an open end on the exhaust gas introduction side and a discharge-side cell that is adjacent to the introduction-side cell and that has an open end on the exhaust gas discharge side are separated by a porous partition. In the exhaust gas purification catalyst 300 in which the wall-flow substrate 11 having such a configuration is used, exhaust gas discharged from an internal combustion engine is introduced from the end part (opening) on the exhaust gas introduction side into the introduction-side cell, then passes through the pores of the partition to be introduced into the adjacent discharge-side cell, and discharged from the end part (opening) on the exhaust gas discharge side. During the course of this process, particulate matter (PM) unlikely passes through the pores of the partition and thus generally deposits on the partition in the introduction-side cell, and the deposited PM is decomposed by the catalytic function of the catalyst layer or by being combusted at a predetermined temperature (e.g., about 500 to 700°C). Exhaust gas comes into contact with the catalyst layer provided in the partition and, accordingly, carbon monoxide (CO) and hydrocarbon (HC) contained in exhaust gas are oxidized to water ($H_2O$) and carbon dioxide ($CO_2$), nitrogen oxide (NOx) is reduced to nitrogen ($N_2$), and thus harmful substances are purified (detoxified). In the present embodiment, removal of particulate matter and purification of harmful substances such as carbon monoxide (CO) are also collectively referred to as "exhaust gas purification performance".

As for the wall-flow substrate 11, various materials and shapes conventionally used in this type of application can be used. For example, the material of the wall-flow substrate 11 is preferably a heat-resistant material so as to be capable of exposure to high-temperature (e.g., 400°C or higher) exhaust gas produced when an internal combustion engine is operated under high-load conditions, or applicable to removal of particulate matter by high-temperature combustion. Examples of heat-resistant materials include ceramics such as cordierite, mullite, aluminum titanate, and silicon carbide (SiC); and alloys such as stainless steel. The shape of the wall-flow substrate 11 can be suitably adjusted in view of, for example, particulate matter collectability and suppression of an increased pressure loss. For example, the outer shape of the wall-flow substrate 11 can be a circular cylinder, an elliptical cylinder, a polygonal cylinder, or the like. The capacity (total volume of cells) of the wall-flow substrate 11 is preferably 0.1 to 5 L, and more preferably 0.5 to 3 L, although it varies depending on, for example, the space where the catalyst will be installed. The total length in the extending direction of the wall-flow substrate 11 (the total length in the extending direction of the partition) is preferably 10 to 500 mm, and more preferably 50 to 300 mm.

The introduction-side cell and the discharge-side cell are regularly arranged along the axis of a cylindrical shape, and as for the adjacent cells, one open end and the other open end in the extending direction are alternately sealed. The introduction-side cell and the discharge-side cell can be configured to have a suitable shape and size by taking in consideration the flow rate and the components of exhaust gas to be fed. For example, the shape of the introduction-side cell and the discharge-side cell can be a triangle; a quadrilateral such as a square, a parallelogram, a rectangle, or a trapezoid; another polygon such as a hexagon or an octagon; or a circle. Also, the substrate may have a high ash capacity (HAC) structure in which the cross-sectional area of the introduction-side cell is different from the cross-sectional area of the discharge-side cell. The number of introduction-side cells and discharge-side cells can be suitably set so as to be able to promote production of a turbulent flow of exhaust gas and suppress clogging caused by, for example, fine particles contained in exhaust gas, and is preferably, but is not particularly limited to, 200 cpsi to 400 cpsi.

The partition that separates adjacent cells is not particularly limited as long as it has a porous structure through which exhaust gas can pass, and the configuration thereof can be suitably adjusted in view of, for example, particulate matter collectability, suppression of an increased pressure loss, and increased mechanical strength of the substrate. For example, in the formation of the catalyst layer inside the pores of the partition using a catalyst slurry, which will be described later, when the pore diameter (e.g., a modal diameter (a pore diameter that appears most frequently in the frequency distribution of pore diameters (the maximum value of a distribution))) or the pore volume is large, there is a tendency that pores are unlikely blocked by the catalyst slurry, and the pressure loss of the resulting exhaust gas purification catalyst is unlikely increased; on the other hand, particulate matter collectability can be poor, and the mechanical strength of the substrate can also be poor. When the pore diameter and the pore volume are small, there is a tendency that pores are likely blocked by the catalyst slurry, and the pressure loss is likely increased; on the other hand, particulate matter collectability is increased, and the mechanical strength of the substrate is also increased.

In view of these, the pore diameter (the modal diameter) of the partition is preferably 8 to 25 $\mu$m, more preferably 10 to 22 $\mu$m, and even more preferably 13 to 20 $\mu$m. The thickness of the partition (the length in the thickness direction perpendicular to the extending direction) is preferably 6 to 12 mil, and more preferably 6 to 10 mil. Moreover, the pore volume of the partition by the mercury intrusion method is preferably 0.2 to 1.0 $cm^3/g$, more preferably 0.25 to 0.9 $cm^3/g$, and even more preferably 0.3 to 0.8 $cm^3/g$. The porosity of the partition by the mercury intrusion method is preferably 20 to 80%, more preferably 40 to 70%, and preferably 60 to 70%. When the pore volume or the porosity is equal to or higher than the lower limit, there is a tendency that soot collecting performance is more increased, and an increased pressure loss is more suppressed. Also, when the pore volume or the porosity is equal to or lower than the upper limit, substrate strength tends to be more increased. The pore diameter (the modal diameter), the pore volume, and the porosity refer to values calculated by the mercury intrusion method under the conditions described in the following Examples.

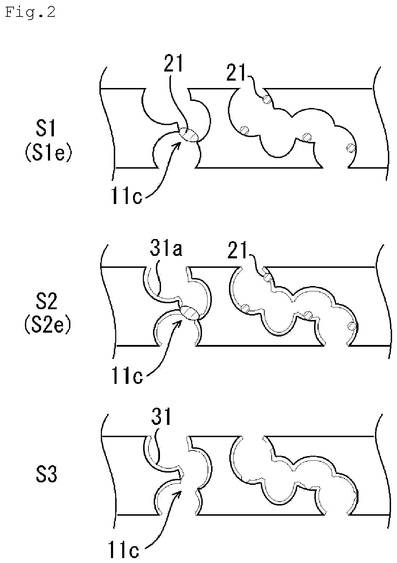

The porous partition contained in the wall-flow substrate 11 has a complex pore shape. In the treated wall-flow substrate 100 that has been treated so as to adhere the solid resin 21 to (the pores of) such a partition, the solid resin 21 is present in advance in a narrow part 11c between the pores, which likely causes an increased pressure loss (S1 in Figure 2). It can be said that, in other words, the treated wall-flow substrate 100 is a wall-flow substrate in which the narrow part 11c is masked (protected) in advance with the solid resin 21. After the catalyst slurry 31a is applied to the treated wall-flow substrate 100 (S2 in Figure 2), the solid resin 21 ubiquitously present in the narrow part 11c can be thermally decomposed by heat treatment. Accordingly, the solid resin 21 can be removed from the narrow part 11c of the pores and, as a result, an exhaust gas purification catalyst can be obtained in which the narrow part 11c blocked by the catalyst layer 31 is barely present (S3 in Figure 2). Accordingly, the narrow part 11c can be prevented from being further narrowed or blocked by formation of the catalyst layer 31, and an exhaust gas purification catalyst with which an increased pressure loss is suppressed can be obtained.

In particular, it was previously thought that a large amount of the adhered solid resin 21 may in turn inhibit application of the catalyst slurry 31a. However, as a result of diligent research by the present inventors, it has been found that an increased amount of the adhered solid resin 21 results in an increased PN collection rate. A possible reason therefor is, but is not particularly limited to, the following: an increased amount of the adhered solid resin 21 results in increased masked portions, in turn, the amount of a catalyst applied to large pores is increased, and, as a result, the pore distribution after catalyst application generally shifts toward the small-pore side. It is thought that when the amount of the adhered solid resin 21 is small, such a change of pore distribution does not occur, and that there is no significant contribution to the PN collection rate.

The amount of the adhered solid resin 21 in the present embodiment is 1.50 to 9.41 g/L, preferably 1.69 to 6.58 g/L, and more preferably 1.88 to 5.64 g/L, based on the volume of the wall-flow substrate 11. With the amount of the adhered solid resin 21 being 1.50 g/L or more, the soot collecting performance of the resulting exhaust gas purification catalyst tends to be more increased. Also, with the amount of the adhered solid resin 21 being 9.41 g/L or less, applicability of the catalyst slurry to the substrate can be ensured.

The amount of the adhered solid resin 21 can be adjusted by, for example, the concentration of the resin in the resin solution 21a described below and the amount of the applied resin solution 21a used. The amount of the adhered solid resin 21 can also be calculated by cutting out a sample having a predetermined volume from the treated wall-flow substrate 100, introducing the sample into a liquid for dissolving the resin (such as hot water or various solvents) to dissolve the solid resin 21, and measuring the amount of the resin therein. The sample to be cut out here is collected from three points, i.e., the exhaust gas introduction side excluding the circumferential part (hereinafter also simply referred to as the "outer skin"), the central part, and the exhaust gas discharge side, of the treated wall-flow substrate 100, and the average value thereof is regarded as the amount of the adhered solid resin 21.

In the present embodiment, the treated wall-flow substrate 100 can be obtained by providing the untreated wall-flow substrate 11 in which the solid resin 21 is not adhered to the partition, and carrying out a treatment to cause the solid resin 21 to adhere to the partition. An example of the treatment method is, but is not particularly limited to, a method involving impregnating the partition of the untreated wall-flow substrate 11 with the resin solution 21a and drying it. A more specific example is a method for obtaining the treated wall-flow substrate 100 including step S1a of impregnating the end part on the exhaust gas introduction side 11a or the exhaust gas discharge side 11b of the wall-flow substrate 11 with the resin solution 21a, step S1d of introducing gas into the wall-flow substrate 11 from the end part side to apply the resin solution 21a with which the wall-flow substrate 11 is impregnated to a porous partition, and step S1e of drying the applied resin solution 21a to cause the solid resin 21 to adhere to at least a part of the partition.

The method for impregnation with the resin solution 21a in step S1a is not particularly limited, and an example is a method involving immersing the end part of the wall-flow substrate 11 in the resin solution 21a. In this method, if necessary, the resin solution 21a may be drawn up by discharging (sucking) gas from the end part on the opposite side. While the end part to be impregnated with the resin solution 21a may be on either the exhaust gas introduction side 11a or the exhaust gas discharge side 11b, the end part on the exhaust gas introduction side 11a is preferably impregnated with the resin solution 21a. This makes it possible to introduce gas in the same direction as that of exhaust gas in step S1d described below, and apply the resin solution 21a to a complex pore shape in accordance with the flow of exhaust gas. Accordingly, an increased soot collecting performance is expected, and an increased exhaust gas purification performance can be expected as well.

In step S1d, gas F1 is introduced into the wall-flow substrate 11 from an end part side 1a impregnated with the resin solution 21a (Figure 1). Accordingly, the impregnating resin solution 21a moves along the gas flow from the introduction side of the wall-flow substrate 11 to an inner part of the wall-flow substrate 11, and reaches the end part on the gas discharge side. During the course of this process, the resin solution 21a passes through the inside of the pores of the partition, and thus the resin solution 21a can be applied to the inside of the pores.

There is no particular limitation to the orientation of the wall-flow substrate 11 when introducing gas into the wall-flow substrate 11 from the end part side impregnated with the resin solution 21a. However, the orientation of the wall-flow substrate 11 is preferably adjusted such that the extending direction of the partition and the vertical direction are substantially parallel and that the end part impregnated with the resin solution 21a faces vertically upward (S1b to S1c in Figure 1), and preferably, gas is then introduced vertically downward from above into the wall-flow substrate 11 from the end part side impregnated with the resin solution 21a (S1d in Figure 1). Accordingly, the flow direction of the introduced gas matches the direction of gravity (vertically downward direction), and thus the resin solution 21a can be applied more uniformly to the partition, compared to a case where gas is introduced vertically upward from below against the direction of gravity, or a case where gas is introduced horizontally while the extending direction of the partition arranged is perpendicular to the direction of gravity.

The drying condition in step S1e is not particularly limited as long as it is a condition such that the solvent volatilizes from the resin solution 21a to allow the solid resin to remain on (adheres to) the surface of the partition. For example, the drying temperature is preferably 100 to 225°C, more preferably 100 to 200°C, and even more preferably 125 to 175°C. The drying time is preferably 0.5 to 2 hours, and preferably 0.5 to 1.5 hours.

(Resin solution)

Next, the resin solution 21a for forming the solid resin 21 will now be described. The resin solution 21a contains a resin and a solvent such as water. Examples of the resin include, but are not particularly limited to, polyvinyl alcohol-based resins such as polyvinyl alcohol and saponified products of polyvinyl alcohol, such as polyvinyl butyral; acrylic resins such as poly(meth)acrylic acid and poly(meth)acrylate; and cellulose-based resins such as methyl cellulose, ethyl cellulose, and carboxymethyl cellulose. Among these, water soluble resins are preferable because they have excellent affinity with the wall-flow substrate 11 made of ceramic or the like and can readily thermally decompose at high temperature. From such a viewpoint, the water soluble resin is preferably a polyvinyl alcohol-based resin, and is more preferably polyvinyl alcohol. That is to say, a water soluble resin-containing solution containing at least water and a water soluble resin is preferably used as the resin solution 21a.

In view of the amount of the solid resin 21 to be adhered to the wall-flow substrate 11 and resin applicability such as viscosity, the concentration of the resin is preferably 0.80 to 5.00% by mass, more preferably 0.85 to 4.50% by mass, and even more preferably 0.90 to 4.00% by mass, based on the total amount of the resin solution. With the resin concentration being 0.80% by mass or more, the soot collecting performance of the resulting exhaust gas purification catalyst tends to be more increased. Also, with the concentration of the resin being 5.00% by mass or less, applicability of the resin solution to the substrate can be ensured.

<Catalyst applying step>

Further, in this catalyst applying step S2, the catalyst slurry 31a is applied to the partition of the treated wall-flow substrate 100 (Figure 1). Accordingly, a catalyst slurry-applied wall-flow substrate 200 is obtained in which the catalyst slurry 31a is applied to the partition of the treated wall-flow substrate 100. The method for applying the catalyst slurry 31a is not particularly limited, and an example is a method involving impregnating a part of the wall-flow substrate 100 with the catalyst slurry 31a and spreading the slurry over the entirety of the partition of the wall-flow substrate 100. A more specific example is a method including step S2a of impregnating the end part on the exhaust gas introduction side 11a or the exhaust gas discharge side 11b of the wall-flow substrate 100 with the catalyst slurry 31a, and step S2d of introducing gas into the wall-flow substrate 100 from the end part side to apply the catalyst slurry 31a with which the wall-flow substrate 100 is impregnated to the porous partition.

The method for impregnation with the catalyst slurry 31a in step S2a is not particularly limited, and an example is a method involving immersing the end part of the wall-flow substrate 100 in the catalyst slurry 31a. In this method, if necessary, the catalyst slurry 31a may be drawn up by discharging (sucking) gas from the end part on the opposite side.

The end part to be impregnated with the catalyst slurry 31a may be on either the exhaust gas introduction side 11a or the exhaust gas discharge side 11b; however, the end part on the exhaust gas introduction side 11a is preferably impregnated with the catalyst slurry 31a. This makes it possible to introduce gas in the same direction as that of exhaust gas in step S2d described below, and apply the catalyst slurry 31a to a complex pore shape in accordance with the flow of exhaust gas. Accordingly, soot collecting performance is more increased, and an increased exhaust gas purification performance can be expected as well.

(Catalyst slurry)

The catalyst slurry 31a for forming the catalyst layer 31 to be provided on the surface of pores in the partition will now be described. The catalyst slurry 31a contains a catalyst powder and a solvent such as water. The catalyst powder is a group of multiple catalyst particles (which may be simply referred to as "particles" or the like below) including catalyst metal particles and carrier particles for supporting the catalyst metal particles, and forms the catalyst layer 31 through the firing step described below. While the catalyst particles used in the present embodiment are composite particles including catalyst metal particles and carrier particles for supporting the catalyst metal particles, the type thereof is not particularly limited, and the catalyst particles to be used can be suitably selected from known catalyst particles.

In view of applicability to the inside of the pores of the partition, the solid content of the catalyst slurry 31a is preferably 1 to 50% by mass, more preferably 10 to 40% by mass, and even more preferably 15 to 30% by mass.

The D90 particle size of the catalyst powder is preferably 1 to 7 $\mu$m, more preferably 1 to 6 $\mu$m, and even more preferably 1 to 5 $\mu$m. With the D90 particle size being 1 $\mu$m or more, there is a tendency that the crushing time when crushing the catalyst powder with a milling apparatus can be shortened, and operational efficiency is more increased. Also, with the D90 particle size being 7 $\mu$m or less, there is a tendency that clogging of the partition with coarse particles is suppressed, and soot collecting performance is increased. Herein, the D90 particle size means a diameter measured with a laser diffraction particle size distribution analyzer (e.g., a laser diffraction particle size distribution analyzer SALD-3100 manufactured by Shimadzu Corporation).

Various metal species capable of functioning as an oxidation catalyst or an reduction catalyst can be used as catalyst metals that constitute the catalyst metal particles. Examples include platinum group metals such as platinum (Pt), palladium (Pd), rhodium (Rh), ruthenium (Ru), iridium (Ir), and osmium (Os). Among these, palladium (Pd) and platinum (Pt) are preferable in view of oxidizing activity, and rhodium (Rh) is preferable in view of reducing activity. One of these metals may be used singly, or two or more may be used in combination. In view of increasing the contact area with exhaust gas, the average particle size of the catalyst metal particles in the catalyst slurry 31a is preferably small. Specifically, the average particle size of the catalyst metal particles is preferably 1 to 15 nm, more preferably 1 to 10 nm, and even more preferably 1 to 7 nm. The average particle size of catalyst metal particles can be verified by using, for example, a scanning transmission electron microscope (STEM) such as HD-2000 manufactured by Hitachi High-Technologies Corporation. Herein, the circle-equivalent diameters of 10 randomly selected catalyst metal particles are calculated, and the average value thereof is regarded as the average particle size of the catalyst metal particles.

Inorganic compounds conventionally used in this type of exhaust gas purification catalyst can be considered as the carrier particles for supporting the catalyst metal particles. Examples include, but are not particularly limited to, oxygen-storing materials (OSC materials) such as cerium oxide (ceria: $CeO_2$) and ceria-zirconia composite oxide (CZ composite oxide), oxides such as aluminum oxide (alumina: $Al_2O_3$), zirconium oxide (zirconia: $ZrO_2$), silicon oxide (silica: $SiO_2$), and titanium oxide (titania: $TiO_2$), and composite oxides including mainly such oxides. Here, the oxygen-storing material (OSC material) refers to a material that stores oxygen present in exhaust gas when the air-fuel ratio of the exhaust gas is lean (i.e., an oxygen excessive atmosphere), and releases stored oxygen when the air-fuel ratio of the exhaust gas is rich (i.e., a fuel excessive atmosphere).

In view of exhaust gas purification performance, the specific surface area of the carrier particles is preferably 10 to 500 $m^2/g$, and more preferably 30 to 200 $m^2/g$.

In view of increasing exhaust gas purification performance and suppressing the progress of catalyst metal grain growth (sintering), the ratio of the catalyst metal supported on the wall-flow substrate (the amount of catalyst metal per one liter of the substrate) is preferably 0.5 to 10 g/L, more preferably 1 to 8 g/L, and even more preferably 1 to 6 g/L.

In step S2d, the gas F1 is introduced into the wall-flow substrate 100 from the end part side 1a impregnated with the catalyst slurry 31a (Figure 1). Accordingly, the impregnating catalyst slurry 31a moves along the gas flow from the introduction side of the wall-flow substrate 100 to an inner part of the wall-flow substrate 100, and reaches the end part on the gas discharge side. During the course of this process, the catalyst slurry 31a passes through the inside of the pores of the partition, and thus the catalyst slurry 31a can be applied to the inside of the pores.

There is no particular limitation to the orientation of the wall-flow substrate 100 when introducing gas into the wall-flow substrate 100 from the end part side impregnated with the catalyst slurry 31a. However, the orientation of the wall-flow substrate 100 is preferably adjusted such that the extending direction of the partition and the vertical direction are substantially parallel and that the end part impregnated with the catalyst slurry 31a faces vertically upward (S2b to S2c in Figure 1), and preferably, gas is then introduced vertically downward from above into the wall-flow substrate 100 from the end part side impregnated with the catalyst slurry 31a (S2d in Figure 1). Accordingly, the flow direction of the introduced gas matches the direction of gravity (vertically downward direction), and thus the catalyst slurry 31a can be applied more uniformly to the partition, compared to a case where gas is introduced vertically upward from below against the direction of gravity, or a case where gas is introduced horizontally while the extending direction of the partition arranged is perpendicular to the direction of gravity.

<Heat treatment step>

In this heat treatment step S3 after the catalyst application step, the wall-flow substrate 100 to which the catalyst slurry 31a is applied (the catalyst slurry-applied wall-flow substrate 200) is thermally treated to thermally decompose the solid resin. The heat treatment temperature is not particularly limited, and is preferably 400 to 650°C, more preferably 450 to 600°C, and even more preferably 500 to 600°C. The heat treatment time is preferably 0.5 to 2 hours, and preferably 0.5 to 1.5 hours.

A drying step of drying the wall-flow substrate 200 may be carried out before the heat treatment step. The drying temperature is not particularly limited, and is preferably 100 to 225°C, more preferably 100 to 200°C, and more preferably 125 to 175°C. The drying time is preferably 0.5 to 2 hours, and preferably 0.5 to 1.5 hours.

<Firing step>

In the firing step, the wall-flow substrate 100 to which the catalyst slurry 31a is applied (the catalyst slurry-applied wall-flow substrate 200) is thermally treated to form the catalyst layer 31 from a coating film of the catalyst slurry 31a. The firing step may be performed simultaneously with the heat treatment step. The firing temperature is not particularly limited, and is preferably 400 to 650°C, more preferably 450 to 600°C, and even more preferably 500 to 600°C. The firing time is preferably 0.5 to 2 hours, and preferably 0.5 to 1.5 hours.

[Exhaust gas purification catalyst]

The exhaust gas purification catalyst of the present embodiment is obtained by the above method for producing an exhaust gas purification catalyst, and is used to purify exhaust gas discharged from an internal combustion engine. In particular, the exhaust gas purification catalyst is preferably used in a gasoline particulate filter (GPF) capable of capturing and removing particulate matter contained in exhaust gas. A mixture containing oxygen and fuel gas is fed to an internal combustion engine (an engine), and this mixture is combusted to convert combustion energy into mechanical energy. The mixture combusted at this time becomes exhaust gas and is discharged into the exhaust system. The exhaust system is provided with an exhaust gas purification apparatus having an exhaust gas purification catalyst, and thus harmful substances (e.g., carbon monoxide (CO), hydrocarbon (HC), and nitrogen oxide (NOx)) contained in exhaust gas are purified and, also, particulate matter (PM) contained in exhaust gas is collected and removed by the exhaust gas purification catalyst.

The pore diameter (the modal diameter) of the partition of the catalyst-applied exhaust gas purification catalyst obtained by the above production method is preferably 8 to 23 $\mu$m, more preferably 12 to 20 $\mu$m, and even more preferably 14 to 18 $\mu$m, as measured by the mercury intrusion method. The pore volume of the partition of the catalyst-applied exhaust gas purification catalyst is preferably 0.2 to 1.0 cm$^3$/g, more preferably 0.25 to 0.9 cm$^3$/g, and even more preferably 0.3 to 0.8 cm$^3$/g, as measured by the mercury intrusion method. Moreover, the porosity of the partition of the catalyst-applied exhaust gas purification catalyst is preferably 20 to 80%, more preferably 30 to 70%, and preferably 35 to 60%, as measured by the mercury intrusion method. The pore diameter (the modal diameter), the pore volume, and the porosity refer to values obtained by the mercury intrusion method under the conditions described in Examples described later.

<Treated wall-flow substrate>

The treated wall-flow substrate 100 of the present embodiment has the wall-flow substrate 11 having a plurality of passages defined by a porous partition, and the solid resin 21 adhered to the partition, wherein the amount of the adhered solid resin 21 is 1.50 to 9.41 g/L. The embodiments of the wall-flow substrate 11 and the solid resin 21 adhered to the partition thereof are as described above. The method for producing the treated wall-flow substrate 100 is also as described above. In particular, in view of using a resin that can be thermally decomposed at high temperature and that, once solidified, unlikely redissolves in the catalyst slurry 31a, the solid resin 21 preferably contains a water soluble resin, and more preferably the water soluble resin contains polyvinyl alcohol.

The amount of the adhered solid resin 21 in the treated wall-flow substrate is 1.50 to 9.41 g/L, preferably 1.69 to 6.58 g/L, and more preferably 1.88 to 5.64 g/L. With the amount of the adhered solid resin 21 being 1.50 g/L or more, soot collecting performance tends to be more increased. Also, with the amount of the adhered solid resin 21 being 9.41 g/L or less, applicability of the catalyst slurry to the substrate can be ensured.

Examples

The features of the present invention will now be described more specifically by way of Test Examples, Examples, and Comparative Examples, but the present invention is not limited thereto in any way. In other words, materials, amounts used, proportions, treatment details, treatment procedures, and others set forth in the following Examples can be suitably changed without departing from the scope of the present invention. The values of various production conditions and evaluation results in the following Examples have a meaning as preferable upper limit values or preferable lower limit values in the embodiments of the present invention, and a preferable range may be a range defined by a combination of the above-described upper or lower limit value and a value in the following Examples or by a combination of values in the Examples.

(Example 1)

Polyvinyl alcohol (hereinafter referred to as "PVA") and ion exchanged water were mixed to prepare a 1.0% by mass aqueous PVA solution. Next, a wall-flow honeycomb substrate made of cordierite (number of cells/mill thickness: 300 cells/8 mil, diameter: 118.4 mm, total length: 127 mm) was provided. The end part on the exhaust gas introduction side of the substrate was immersed in the aqueous PVA solution, and the inside of the substrate was kept impregnated with the aqueous PVA solution by sucking the solution under reduced pressure from the end part side on the opposite side. Gas was introduced vertically downward into the substrate from the end surface side that was kept impregnated with the aqueous PVA solution to apply the aqueous PVA solution to the surface inside the pores of the partition of the substrate and, also, an excessive portion of the aqueous PVA solution was blown off from the end part on the gas discharge side. At that time, air blowing was performed until no aqueous PVA solution came out from the end part of the gas discharge side. Then, the substrate was dried at 150°C.

Alumina powder having a D50 particle size of 28 $\mu$m and a BET specific surface area of 141 $m^2$/g was impregnated with an aqueous palladium nitrate solution and then fired at 500°C for 1 hour to give Pd-supported alumina powder (Pd content: 4.3% by mass). Also, zirconia-lanthanum modified alumina powder having a D50 particle size of 29 $\mu$m and a BET specific surface area of 145 $m^2$/g was impregnated with an aqueous rhodium nitrate solution and then fired at 500°C for 1 hour to give Rh-supported zirconia-lanthanum modified alumina powder (Rh content: 0.7% by mass) was obtained.

Then, 1 kg of the resulting Pd-supported alumina powder, 1 kg of the resulting Rh-supported zirconia-lanthanum modified alumina powder, 1 kg of ceria zirconia composite oxide powder having a D50 particle size of 10 $\mu$m and a BET specific surface area of 71 $m^2$/g, 195 g of a 46% aqueous lanthanum nitrate solution, and ion exchanged water were mixed, the resulting mixture was fed to a ball mill and milled until catalyst particles had a predetermined particle size, and thus a catalyst slurry having a D90 particle size of 3.0 $\mu$m was obtained.

Then, the end part on the exhaust gas introduction side of the substrate treated with a PVA solution was immersed in the catalyst slurry, and the catalyst slurry was sucked under reduced pressure from the end part side on the opposite side to keep the inside of the substrate impregnated with the catalyst slurry. The end surface side kept impregnated with the catalyst slurry was arranged so as to face vertically upward, gas was introduced vertically downward into the substrate from the end surface side to apply the catalyst slurry to the surface inside the pores of the partition of the substrate and, also, an excessive portion of the catalyst slurry was blown off from the end part on the gas discharge side. Then, the catalyst slurry-applied substrate was dried at 150°C and then fired at 550°C in air to prepare an exhaust gas purification catalyst. The amount of the applied catalyst after firing was 60.9 g/L per one liter of the substrate (excluding the mass of platinum group metal).

(Example 2)

An exhaust gas purification catalyst was prepared in the same manner as Example 1 except that a 3.0% by mass aqueous PVA solution was prepared by mixing PVA and ion exchanged water and used.

(Example 3)

An exhaust gas purification catalyst was prepared in the same manner as Example 1 except that the catalyst slurry was applied such that the amount of the applied catalyst after firing was 40.6 g per one liter of the substrate (excluding the mass of platinum group metal).

(Example 4)

An exhaust gas purification catalyst was prepared in the same manner as Example 1 except that the catalyst slurry was applied such that the amount of the applied catalyst after firing was 76.1 g per one liter of the substrate (excluding the mass of platinum group metal).

(Comparative Example 1)

An exhaust gas purification catalyst was prepared in the same manner as Example 1 except that the substrate was not treated with an aqueous PVA solution.

(Comparative Example 2)

An exhaust gas purification catalyst was prepared in the same manner as Example 3 except that the substrate was not treated with an aqueous PVA solution.

(Comparative Example 3)

An exhaust gas purification catalyst was prepared in the same manner as Example 4 except that the substrate was not treated with an aqueous PVA solution.

[Table 1]

| | Pre-treatment | | Catalyst metal | | Catalyst composition / g/L | | | | Amount of applied catalyst after firing (g/L) | PN collection rate |
|---|---|---|---|---|---|---|---|---|---|---|
| | Concentration of resin solution | Amount adhered | Pd/Rh | g/L | Pd-supported alumina | Rh-supported zirconia-lanthanum modified alumina | Ceria-zirconia composite oxide | Lanthanum (in terms of lanthanum oxide) | | % |
| Example 1 | 1.0% | 1.86 g/L | 6/1 | 1.06 | 20.0 | 20.0 | 20.0 | 0.9 | 60.9 | 70.1 |
| Example 2 | 3.0% | 5.65 g/L | 6/1 | 1.06 | 20.0 | 20.0 | 20.0 | 0.9 | | 72.9 |
| Comparative Example 1 | None | None | 6/1 | 1.06 | 20.0 | 20.0 | 20.0 | 0.9 | | 69.0 |
| Example 3 | 1.0% | 1.86 g/L | 6/1 | 0.71 | 13.3 | 13.3 | 13.3 | 0.6 | 40.6 | 71.1 |
| Comparative Example 2 | None | None | 6/1 | 0.71 | 13.3 | 13.3 | 13.3 | 0.6 | | 70.1 |
| Example 4 | 1.0% | 1.86 g/L | 6/1 | 1.33 | 25.0 | 25.0 | 25.0 | 1.1 | 76.1 | 69.0 |
| Comparative Example 3 | None | None | 6/1 | 1.33 | 25.0 | 25.0 | 25.0 | 1.1 | | 68.1 |

The mass of platinum group metal is excluded from the catalyst composition.

```
Amount adhered = (Increased mass of wall-flow substrate
when air blowing was performed until no aqueous PVA
solution came out from end part on gas discharge side) ×
(Concentration of aqueous PVA solution) / Substrate
volume
```

[Particle size distribution measurement]

As for the particle size distribution of a catalyst slurry, the D90 particle size was measured by laser diffractometry using a laser diffraction particle size distribution analyzer SALD-3100 manufactured by Shimadzu Corporation.

[Determination of soot collecting performance]

On the premise of PN regulation on gasoline engines, soot collecting performance was determined. Specifically, the exhaust gas purification catalysts prepared in the Examples and Comparative Examples were attached to a vehicle equipped with a 1.5 L direct-injection turbocharged engine, and the number of emitted soot particles during WLTC mode driving (PNtest) was measured using a solid particle counting system (manufactured by HORIBA Ltd., product name: MEXA-2100 SPCS). The soot collection rate was calculated in terms of a decrease expressed in percentage from the amount of soot measured when the above test was carried out without attaching an exhaust gas purification catalyst ($PN_{blank}$) according to the following formula:

$$\text{Soot collection rate (\%) = } (PN_{blank} - PN_{test}) / PN_{blank} \times 100 \text{ (\%)}$$

Industrial Applicability

According to the method for producing an exhaust gas purification catalyst of the present invention, an exhaust gas purification catalyst delivering an increased soot collecting performance can be relatively easily obtained. The exhaust gas purification catalyst thus produced can be broadly and effectively used as an exhaust gas purification catalyst for removing particulate matter contained in the exhaust gas of gasoline engines. The exhaust gas purification catalyst can be effectively used as an exhaust gas purification catalyst for removing particulate matter contained in the exhaust gas of not only gasoline engines but also diesel engines, jet engines, boilers, gas turbines, and the like.

Reference Signs List

100     Treated wall-flow substrate
11      Untreated wall-flow substrate
11a     Exhaust gas introduction side
11b     Exhaust gas discharge side
21      Solid resin
21a     Resin solution
31      Catalyst layer
31a     Catalyst slurry
F1      Gas
F2      Gas
200     Catalyst slurry-applied wall-flow substrate
300     Exhaust gas purification catalyst

**Claims**

1. A method for producing an exhaust gas purification catalyst that purifies exhaust gas emitted from an internal combustion engine, the method comprising:

   a substrate providing step of providing a treated wall-flow substrate having a partition to which a solid resin is adhered, and
   a catalyst applying step of applying a catalyst slurry to the partition,

   wherein
   an amount of the adhered solid resin is 1.50 to 9.41 g/L.

2. The method for producing an exhaust gas purification catalyst according to claim 1, wherein the substrate providing step comprises:

   a sub-step of impregnating an end part on an exhaust gas introduction side or an exhaust gas discharge side of the wall-flow substrate with a resin solution,
   a sub-step of introducing gas into the wall-flow substrate from the end part side to apply the resin solution that impregnates the wall-flow substrate to the porous partition, and
   a sub-step of drying the applied resin solution to cause the solid resin to adhere to at least a part of the partition.

3. The method for producing an exhaust gas purification catalyst according to claim 2, wherein

   the resin solution comprises polyvinyl alcohol, and
   a concentration of the polyvinyl alcohol is 0.80 to 5.00% by mass based on the total amount of the resin solution.

4. The method for producing an exhaust gas purification catalyst according to any one of claims 1 to 3, wherein the catalyst applying step comprises:

   a sub-step of impregnating an end part on an exhaust gas introduction side or an exhaust gas discharge side of the wall-flow substrate with the catalyst slurry, and
   a sub-step of introducing gas into the wall-flow substrate from the end part side to apply the catalyst slurry that impregnates the wall-flow substrate to the porous partition.

5. The method for producing an exhaust gas purification catalyst according to any one of claims 1 to 4, further comprising a heat treatment step of thermally decomposing the solid resin after the catalyst applying step.

6. An exhaust gas purification catalyst obtained by the method for producing an exhaust gas purification catalyst according to any one of claims 1 to 5.

7. A treated wall-flow substrate comprising:

   a wall-flow substrate having a plurality of passages defined by a porous partition, and
   a solid resin adhered to the partition,

   wherein
   an amount of the adhered solid resin is 1.50 to 9.41 g/L.

8. The treated wall-flow substrate according to claim 7, wherein the solid resin comprises polyvinyl alcohol.

Fig.1

Fig.2

S1
(S1e)

21   21

11c

S2
(S2e)

31a   21

11c

S3

31

11c

## INTERNATIONAL SEARCH REPORT

International application No.

PCT/JP2020/032989

### A. CLASSIFICATION OF SUBJECT MATTER
Int. Cl. B01J35/04(2006.01)i, B01D53/94(2006.01)i, B01J23/63(2006.01)i, B01J37/02(2006.01)i, F01N3/022(2006.01)i, F01N3/035(2006.01)i
FI: B01J35/04 301M, B01D53/94 220, B01D53/94 245, B01D53/94 280, B01J23/63 A ZAB, B01J37/02 101C, B01J37/02 301C, B01J37/02 301E, F01N3/022 C, F01N3/022 Z, F01N3/035 A

According to International Patent Classification (IPC) or to both national classification and IPC

### B. FIELDS SEARCHED

Minimum documentation searched (classification system followed by classification symbols)
Int. Cl. B01D53/73, B01D53/86-53/90, B01D53/94, B01D53/96, B01J21/00-38/74, F01N3/00, F01N3/02, F01N3/04-3/38, F01N9/00-11/00

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-122897 A (NE CHEMCAT CORP.) 25 July 2019, paragraphs [0050]-[0053], [0059], [0061], [0063], table 1 | 1-8 |
| A | JP 2007-526117 A (CORNING INC.) 13 September 2007, entire text | 1-8 |
| A | JP 2014-510631 A (CORNING INC.) 01 May 2014, entire text | 1-8 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.10.2020 | 20.10.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

| | | International application No. |
|---|---|---|
| | | PCT/JP2020/032989 |

| Patent Documents referred to in the Report | Publication Date | Patent Family | Publication Date |
|---|---|---|---|
| JP 2019-122897 A | 25.07.2019 | JP 6523496 B1 | |
| JP 2007-526117 A | 13.09.2007 | US 2005/0191480 A1 entire document US 2006/0270816 A1 WO 2005/091821 A2 EP 1735146 A1 KR 10-2007-0004777 A CN 101098898 A AT 463520 T KR 10-1152009 B | |
| JP 2014-510631 A | 01.05.2014 | US 2012/0252664 A1 entire document WO 2012/161833 A1 EP 2691176 A1 CN 103459028 A | |

Form PCT/ISA/210 (patent family annex) (January 2015)

**EP 4 035 774 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016060048 A